# EUROPEAN PATENT APPLICATION

(11) **EP 4 636 007 A1**
(43) Date of publication of application: **22.10.2025**
(21) Application number: 23903099.2
(22) Date of filing: 18.10.2023
(51) Int. Cl.: C08G 59/50, C08K 5/5399, C09D 163/00, C08L 63/00

(54) **EPOXY RESIN COMPOSITION AND COATING MATERIAL**

(30) Priority: 16.12.2022 JP 2022201567
(71) Applicant: MITSUBISHI GAS CHEMICAL COMPANY, INC., Chiyoda-ku Tokyo 100-8324 (JP)
(72) Inventor: HANAOKA Takuma, Hiratsuka-shi, Kanagawa 254-0016 (JP)
(74) Representative: Gille Hrabal Partnerschaftsgesellschaft mbB Patentanwälte
(86) International application number: PCT/JP2023/037641
(87) International publication number: WO 2024/127800

(57) **Abstract**

An epoxy resin composition containing an epoxy resin (A), an epoxy resin curing agent (B) containing a diamine represented by the following general formula (1) or a modified product thereof (b 1), and a phosphazene-based compound (C), wherein a total content of the components (A) to (C) in the epoxy resin composition is 85 mass% or more, and a paint containing the composition.

NH₂-CH₂-X-CH₂-NH₂ (1)

wherein X is a phenylene group or a cyclohexylene group.

## Description

### Technical Field

The present invention relates to an epoxy resin composition and a paint.

### Background Art

In recent years, wood has been actively used for interior and exterior materials and structural members of public facilities or the like. However, because buildings of public facilities or the like are large in scale and attract a large number of unspecified people, restrictions for fire retarding are often imposed by the Building Standards Act.

To make wood flame-retardant, flame retardants such as boric acid compounds are usually injected into the wood as fireproof treatment. However, the treatment causes a problem of bleeding out of the flame retardant from the wood over time, which turns the wood white (efflorescence phenomenon). To prevent the flame retardant from bleeding out, it is common to paint fireproofed wood, and a fire retardant paint needs to be used for prevention of damage to flame retardancy.

Fire retardant paints are generally opaque and filled with inorganic substances. On the other hand, there is a strong demand for preserving the grain of wood from the viewpoint of appearance, and therefore highly transparent fire retardant paints have been required.

Flame-retardant coating compositions and transparent flame-retardant sheets are also known. For example, in PTL 1, a flame-retardant coating composition containing a coating agent and a mixture of a predetermined stabilizer having steric hindrance and a conventional flame retardant is disclosed. In PTL 2, a fiber-reinforced sheet obtained by impregnating glass fibers with a resin composition containing a cyclic and/or chain-like phosphazene compound of a predetermined structure having a glycidyloxy group, a compound having two or more epoxy groups in one molecule, and a carboxylic acid or carboxylic acid anhydride as curing agent, and by curing the resin composition, is described. According to the description, the resulting transparent flame-retardant sheet with a small difference between the refractive index of the cured resin composition and the refractive index of the glass fibers has less coloring, being excellent in heat resistance, flame retardancy, and transparency.

### Citation List

### Patent Literature

PTL 1: JP 2005-522532 A
PTL 2: JP 2018-172472 A

### Summary of Invention

### Technical Problem

However, the technique disclosed in PTL 1 does not examine the transparency of the coating composition. Although PTL 2 discloses an epoxy resin composition for use in a transparent flame-retardant sheet, the transparency of the sheet is improved by reducing the difference between the refractive index of the resin composition after curing and the refractive index of the glass fiber, so that there is room for improving the transparency of the epoxy resin composition alone.

An object of the present invention is to provide an epoxy resin composition from which a coating film excellent in transparency and flame retardancy can be formed, and a paint containing the composition.

### Solution to Problem

The present inventor has found that the problems can be solved by an epoxy resin composition containing an epoxy resin, an epoxy resin curing agent containing a predetermined diamine or a modified product thereof, and a phosphazene-based compound in a predetermined amount or more.

In other words, the present invention relates to the following.
[1] An epoxy resin composition comprising an epoxy resin (A), an epoxy resin curing agent (B) containing a diamine represented by the following general formula (1) or a modified product thereof (b1), and a phosphazene-based compound (C), wherein a total content of the components (A) to (C) in the epoxy resin composition is 85 mass% or more:

   NH₂-CH₂-X-CH₂-NH₂ (1)

   wherein X is a phenylene group or a cyclohexylene group.
[2] The epoxy resin composition according to the item [1], wherein the component (b1) comprises a diamine represented by the general formula (1) or a styrene-modified product thereof.
[3] The epoxy resin composition according to the item [1] or [2], wherein X in the general formula (1) is a phenylene group.
[4] The epoxy resin composition according to any one of the items [1] to [3], wherein the component (C) comprises a cyclic phosphazene compound.
[5] The epoxy resin composition according to the item [4], wherein the cyclic phosphazene compound is a compound represented by the following general formula (2-1): 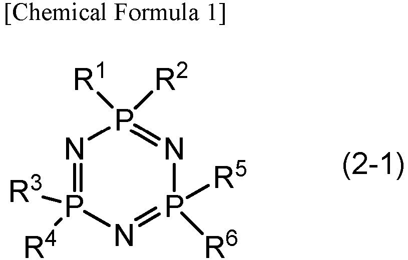 wherein R¹ to R⁶ each independently represent a fluorine atom, an alkoxy group having 1 to 12 carbon atoms, or an aryloxy group having 6 to 12 carbon atoms optionally having a substituent.
[6] The epoxy resin composition according to any one of the items [1] to [5], wherein the content of the component (C) in the epoxy resin composition is 0.1 to 10 mass% as a content of phosphorus atoms in the composition.
[7] A paint comprising the epoxy resin composition according to any one of the items [1] to [6].

### Advantageous Effects of Invention

According to the present invention, an epoxy resin composition from which a coating film excellent in transparency and flame retardancy can be formed, and a paint containing the composition can be provided.

### Description of Embodiments

### [Epoxy resin composition]

The epoxy resin composition of the present invention (hereinafter, also simply referred to as "composition (of the present invention)") contains an epoxy resin (A), an epoxy resin curing agent (B) containing a diamine represented by the following general formula (1) or a modified product thereof (b1), and a phosphazene-based compound (C), wherein a total content of the components (A) to (C) in the epoxy resin composition is 85 mass% or more:

NH₂-CH₂-X-CH₂-NH₂ (1)

wherein X is a phenylene group or a cyclohexylene group.

The epoxy resin composition of the present invention has the constitution, so that a coating film excellent in transparency and flame retardancy can be formed therefrom.

The phosphazene-based compound as component (C) contains phosphorus atoms and nitrogen atoms and is known as a compound having flame retardancy. Although addition of a flame retardant to a resin composition tends to reduce the transparency in general, a phosphazene-based compound allows the transparency to be ensured relatively easily. However, in an epoxy resin composition for paints, use of a phosphazene-based compound alone as flame retardant is insufficient to obtain transparency of the coating film to be formed.

The present inventors have found that by using a combination of an epoxy resin curing agent (B) containing a specific component (b1) and a phosphazene-based compound in an epoxy resin composition, flame retardancy can be imparted without impairing transparency. Although the reason is unclear, it is presumed that the component (b1) having a ring structure contributes to improving flame retardancy, and further, the good compatibility between the component (b1) and the component (C) allows good transparency and flame retardancy to be obtained. **In** addition, with a total content of the components (A) to (C) in the epoxy resin composition of 85 mass% or more, the effects of the present invention can be effectively exhibited, and a coating film superior in transparency and flame retardancy can be formed.

### <Epoxy resin (A)>

The epoxy resin (A) as the main agent of the epoxy resin composition may be any of a saturated or unsaturated aliphatic compound, an alicyclic compound, an aromatic compound, and a heterocyclic compound. From the viewpoint of obtaining a coating film having high water resistance and chemical resistance, an epoxy resin containing an aromatic ring or an alicyclic structure in the molecule is preferred.

Specific examples of the epoxy resin (A) include at least one resin selected from the group consisting of an epoxy resin having a glycidylamino group derived from metaxylylenediamine, an epoxy resin having a glycidylamino group derived from paraxylylenediamine, an epoxy resin having a glycidylamino group derived from 1,3-bis(aminomethyl)cyclohexane, an epoxy resin having a glycidylamino group derived from 1,4-bis(aminomethyl)cyclohexane, an epoxy resin having a glycidylamino group derived from diaminodiphenylmethane, an epoxy resin having a glycidylamino group and/or a glycidyloxy group derived from paraaminophenol, an epoxy resin having a glycidyloxy group derived from bisphenol A, an epoxy resin having a glycidyloxy group derived from bisphenol F, an epoxy resin having a glycidyloxy group derived from phenol novolac, and an epoxy resin having a glycidyloxy group derived from resorcinol. Alternatively, two or more of the epoxy resins described above may be mixed for use.

Among the above, from the viewpoint of obtaining a coating film having high transparency, flame retardancy, chemical resistance, etc., the epoxy resin (A) is preferably one having at least one selected from the group consisting of an epoxy resin having a glycidylamino group derived from metaxylylenediamine, an epoxy resin having a glycidylamino group derived from paraxylylenediamine, an epoxy resin having a glycidyloxy group derived from bisphenol A, and an epoxy resin having a glycidyloxy group derived from bisphenol F as main component, and from the viewpoint of obtaining a coating film having high transparency, flame retardancy, chemical resistance, etc., and from the viewpoint of availability and economical aspects, the epoxy resin (A) is more preferably one having an epoxy resin having a glycidyloxy group derived from bisphenol A as main component.

The term "main component" as used herein means that other components may be contained within a range that does not deviate from the spirit of the present invention, and means preferably 50 to 100 mass%, more preferably 70 to 100 mass%, and still more preferably 90 to 100 mass% of the total.

The epoxy resin (A) may be any one of a solid epoxy resin and a liquid epoxy resin. In the present invention, "solid epoxy resin" means an epoxy resin that is in a solid state at room temperature (25°C), and "liquid epoxy resin" means an epoxy resin that is in a liquid state at room temperature (25°C).

The epoxy equivalent weight of the epoxy resin (A) is preferably 150 g/eq or more from the viewpoint of obtaining a coating film having high transparency, flame retardancy, chemical resistance, etc., and preferably 1000 g/eq or less, more preferably 800 g/eq or less, still more preferably 500 g/eq or less, furthermore preferably 300 g/eq or less, and furthermore preferably 250 g/eq or less from the viewpoint of curability.

### <Epoxy resin curing agent (B)>

The epoxy resin curing agent (B) contains a diamine represented by the following general formula (1) or a modified product thereof (b1):

NH₂-CH₂-X-CH₂-NH₂ (1)

wherein X is a phenylene group or a cyclohexylene group.

### (Diamine represented by general formula (1) or modified product thereof (b1))

The diamine represented by the general formula (1) for use as component (b1) is a compound of which X in the formula (1) is a phenylene group or a cyclohexylene group.

Specifically, in the formula (1), X is at least one selected from the group consisting of a 1,2-phenylene group, a 1,3-phenylene group, a 1,4-phenylene group, a 1,2-cyclohexylene group, a 1,3-cyclohexylene group, and a 1,4-cyclohexylene group. From the viewpoint of obtaining a coating film having high transparency, flame retardancy, chemical resistance, etc., X is preferably a phenylene group, more preferably at least one selected from the group consisting of a 1,2-phenylene group, a 1,3-phenylene group, and a 1,4-phenylene group, and still more preferably a 1,3-phenylene group.

In the present specification, the cyclohexylene group includes both cis and trans isomers.

Specific examples of the diamine represented by the general formula (1) include xylylenediamines such as ortho-xylylenediamine, metaxylylenediamine (MXDA), and paraxylylenediamine (PXDA); and bis(aminomethyl)cyclohexanes such as 1,2-bis(aminomethyl)cyclohexane, 1,3-bis(aminomethyl)cyclohexane, and 1,4-bis(aminomethyl)cyclohexane.

Among the above, from the viewpoint of obtaining a coating film having high transparency and flame retardancy, the diamine represented by the general formula (1) is preferably xylylenediamine, and more preferably metaxylylenediamine.

Examples of the modified product of the diamine represented by the general formula (1) for use as component (b1) include an epoxy-modified product obtained by reacting the diamine represented by the general formula (1) with an epoxy compound having at least one epoxy group; a reaction product obtained by reacting the diamine represented by the general formula (1) with an unsaturated hydrocarbon compound; a carboxylic acid-modified product obtained by reacting the diamine represented by the general formula (1) with a carboxylic acid or a derivative thereof; a Mannich-modified product obtained by reacting the diamine represented by the general formula (1) with a phenol compound and an aldehyde compound; a ketoimine (ketimine) obtained by reacting the diamine represented by the general formula (1) with a ketone compound; a phosphorus-modified product obtained by reacting the diamine represented by the general formula (1) with a phosphorus-containing compound. These may be used alone or in combination of two or more.

Examples of the phosphorus-modified product obtained by reacting the diamine represented by the general formula (1) with a phosphorus-containing compound include a phosphorus-modified product represented by the following general formula (3): 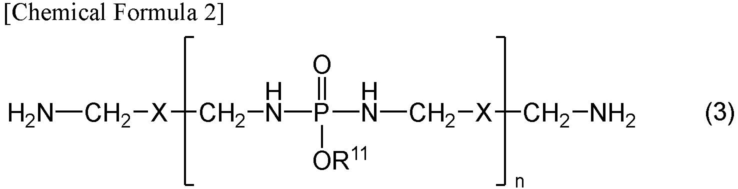 wherein R¹¹ represents a hydrocarbon group and X represents a phenylene group or a cyclohexylene group; and n is a number of 1 to 5.

Examples of the hydrocarbon group in R¹¹ in the general formula (3) include an alkyl group having 1 to 22 carbon atoms, an aryl group having 6 to 18 carbon atoms, and an aralkyl group having 7 to 20 carbon atoms. From the viewpoint of imparting high flame retardancy, R¹¹ is preferably an aryl group having 6 to 18 carbon atoms or an aralkyl group having 7 to 20 carbon atoms, more preferably an aryl group having 6 to 18 carbon atoms, and still more preferably an aryl group having 6 to 10 carbon atoms.

Examples of the aryl group include a phenyl group, a toluyl group, a mesityl group, a biphenyl group, and a naphthyl group, and a phenyl group is preferred.

X in the general formula (3) is the same as the above.

Among the above, from the viewpoint of obtaining a coating film having high transparency and flame retardancy, the modified product of the diamine represented by the general formula (1) is preferably at least one selected from the group consisting of an epoxy-modified product obtained by reacting the diamine represented by the general formula (1) with an epoxy compound having at least one epoxy group, and a reaction product obtained by reacting the diamine represented by the general formula (1) with an unsaturated hydrocarbon compound, and more preferably a reaction product obtained by reacting the diamine represented by the general formula (1) with an unsaturated hydrocarbon compound. The reaction composition referred to here is obtained by reacting the diamine represented by the general formula (1) with an unsaturated hydrocarbon compound, and the composition contains at least a reaction product (adduct) between the diamine represented by the general formula (1) and an unsaturated hydrocarbon compound. The reaction composition may contain unreacted raw materials, by-products, etc. in addition to the adduct.

Examples of the unsaturated hydrocarbon compound in the reaction products obtained by reacting the diamine represented by the general formula (1) with an unsaturated hydrocarbon compound include unsaturated aliphatic hydrocarbon compounds having 2 to 10 carbon atoms and aromatic hydrocarbon compounds having an ethylenically unsaturated bond having 2 to 10 carbon atoms, including at least one selected from the group consisting of ethylene, propylene, butene, pentene, hexene, heptene, octene, nonene, decene, isobutylene, 2-pentene, 3-methyl-1-butene, 2-methyl-2-butene, 2,3-dimethyl-2-butene, cyclohexene, cyclohexadiene, styrene, and divinylbenzene.

In particular, from the viewpoint of obtaining a coating film having high transparency and flame retardancy, the unsaturated hydrocarbon compound is preferably an aromatic hydrocarbon compound having an ethylenically unsaturated bond such as styrene and divinylbenzene, and more preferably styrene. In other words, the modified product of the diamine represented by the general formula (1) for use as component (b1) is preferably a reaction product obtained by reacting the diamine represented by the general formula (1) with an aromatic hydrocarbon compound having an ethylenically unsaturated bond, and more preferably a styrene-modified product of the diamine represented by the general formula (1).

From the viewpoint of obtaining a coating film having high transparency and flame retardancy, the component (b1) preferably contains a diamine represented by the general formula (1) or a styrene-modified product thereof, more preferably contains at least one selected from the group consisting of xylylenediamine and a styrene-modified product of xylylenediamine, still more preferably contains at least one selected from the group consisting of metaxylylenediamine and a styrene-modified product of metaxylylenediamine, and furthermore preferably contains metaxylylenediamine.

From the viewpoint of obtaining a coating film having high transparency and flame retardancy, the content of the diamine represented by the general formula (1) or its styrene-modified product in component (b1) is preferably 30 mass% or more, more preferably 50 mass% or more, still more preferably 60 mass% or more, furthermore preferably 70 mass% or more, furthermore preferably 80 mass% or more, furthermore preferably 90 mass% or more, and 100 mass% or less.

The content of the component (b1) in the epoxy resin curing agent (B) is preferably 30 mass% or more, more preferably 50 mass% or more, still more preferably 60 mass% or more, furthermore preferably 70 mass% or more, furthermore preferably 80 mass% or more, furthermore preferably 90 mass% or more, and 100 mass% or less, from the viewpoint of obtaining a coating film having high transparency and flame retardancy.

### (Curing agent component other than component (b1))

Alternatively, the epoxy resin curing agent (B) may contain a curing agent component other than the component (b1). In the present specification, the curing agent component means a component contained in the epoxy resin curing agent (B) having two or more active hydrogens reactable with the epoxy group in an epoxy resin.

Examples of the curing agent component other than the component (b1) include an amine-based curing agent other than the component (b1), a phenol-based curing agent, an acid anhydride-based curing agent, and a hydrazide-based curing agent.

In the case of using a curing agent component other than the component (b1), the content of the curing agent component in the epoxy resin curing agent (B) is preferably 1 mass% or more, more preferably 5 mass% or more. The upper limit of the content may be within a range not impairing the effect of the present invention, and is preferably 70 mass% or less, more preferably 50 mass% or less, still more preferably 40 mass% or less, furthermore preferably 30 mass% or less, furthermore preferably 20 mass% or less, and furthermore preferably 10 mass% or less.

The active hydrogen equivalent weight of the epoxy resin curing agent (B) is preferably 20 or more, more preferably 30 or more, from the viewpoint of obtaining good physical properties of the coating film, and is preferably 150 or less, from the viewpoint of improving curability. The active hydrogen equivalent weight (hereinafter also referred to as "AHEW") is the mass per mole of active hydrogen in the epoxy resin curing agent.

### <Phosphazene-based compound (C)>

In the present specification, the phosphazene-based compound means a compound having a structure in which phosphorus atoms and nitrogen atoms are bonded alternately.

The phosphazene-based compound (C) (hereinafter also simply referred to as "component (C)") may be any one of a chain-like phosphazene compound and a cyclic phosphazene compound, and from the viewpoint of obtaining a coating film having high transparency and flame retardancy, it is preferable that a cyclic phosphazene compound be included.

From the viewpoint of obtaining a coating film having high transparency and flame retardancy, the content of the cyclic phosphazene compound in the phosphazene-based compound (C) is preferably 30 mass% or more, more preferably 50 mass% or more, still more preferably 60 mass% or more, furthermore preferably 70 mass% or more, furthermore preferably 80 mass% or more, furthermore preferably 90 mass% or more, and 100 mass% or less.

Examples of the cyclic phosphazene compound include a compound represented by the following general formula (2): 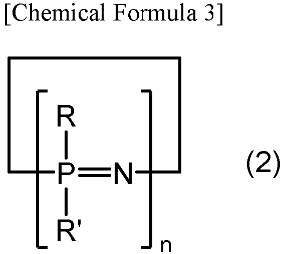 wherein R and R' each independently represent a fluorine atom, an alkoxy group having 1 to 12 carbon atoms, or an aryloxy group having 6 to 12 carbon atoms optionally having a substituent; and n is a number of 3 to 8.

In the formula (2), a plurality of R and a plurality of R' may be all the same or different from each other. In the formula (2), n is preferably 3 to 6, more preferably 3 to 4, and still more preferably 3.

Examples of the cyclic phosphazene compound include preferably a compound represented by the following general formula (2-1): 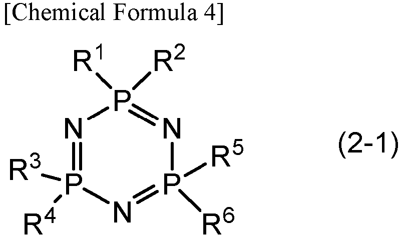 wherein R¹ to R⁶ each independently represent a fluorine atom, an alkoxy group having 1 to 12 carbon atoms, or an aryloxy group having 6 to 12 carbon atoms optionally having a substituent.

The alkoxy group in R¹ to R⁶ has preferably 1 to 8 carbon atoms, more preferably 2 to 6 carbon atoms, and still more preferably 2 to 4 carbon atoms. Specific examples of the preferred alkoxy group include a methoxy group, an ethoxy group, various propoxy groups, and various butoxy groups. The term "various" refers to linear and all types of branched groups, and the same applies hereinafter.

The aryloxy group in R¹ to R⁶ is a group represented by -OR⁷, wherein R⁷ is an aryl group, and may have a substituent on the aromatic ring of the aryl group. Examples of the substituent include a hydroxy group, an alkoxy group having 1 to 4 carbon atoms, a cyano group, a vinyl group, and an epoxy group-containing group, and a cyano group is preferred.

The aryloxy group in R¹ to R⁶ has preferably 6 to 10 carbon atoms, more preferably 6 to 8 carbon atoms.

In formula (2-1), R¹ to R⁶ are preferably a fluorine atom, an alkoxy group having 1 to 4 carbon atoms, or an aryloxy group having 6 to 12 carbon atoms optionally having a cyano group, more preferably an aryloxy group having 6 to 12 carbon atoms optionally having a cyano group, and still more preferably a phenoxy group.

R¹ to R⁶ may be all the same or different from each other, and it is furthermore preferable that all of them be a phenoxy group.

Specific examples of the cyclic phosphazene compound for use as phosphazene-based compound (C) include compounds represented by the following formulas (2-2) to (2-5), and the compound represented by the formula (2-2) is preferred.

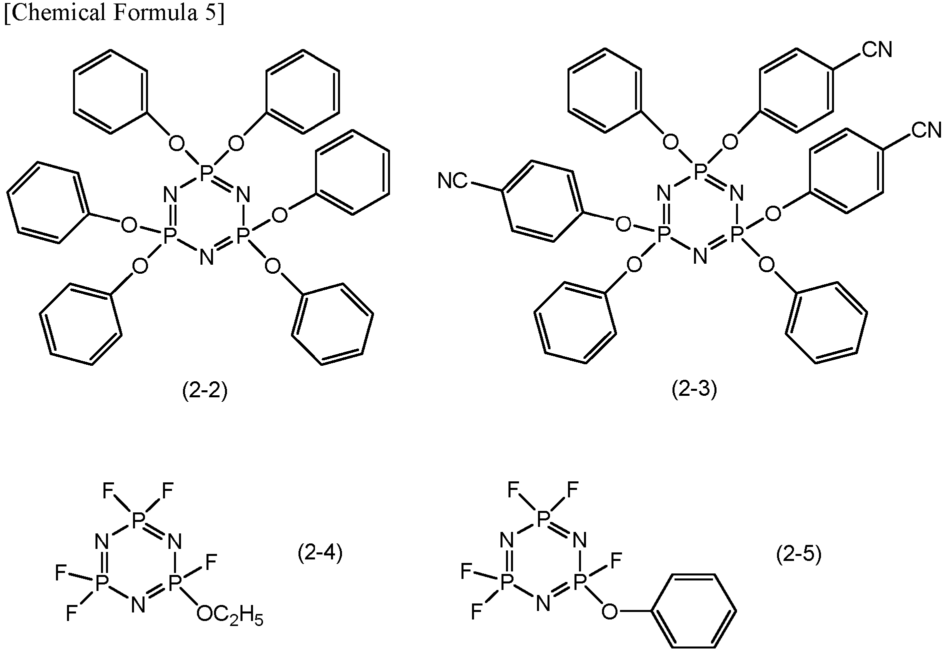

A commercially available product may also be used as the phosphazene-based compound (C). Examples of the commercially available product include "FP-100" (hexaphenoxy cyclotriphosphazene; a compound represented by formula (2-2)), "FP-110" and "FP-300B" (a compound represented by formula (2-3)) manufactured by FUSHIMI Pharmaceutical Co., Ltd., "HISHICOLIN E" (a compound represented by formula (2-4)) and "HISHICOLIN O" (a compound represented by formula (2-5)) manufactured by Nippon Chemical Industrial Co., Ltd., and "SPE-100", "SPB-100", "SPM-100" and "SPS-100" manufactured by Otsuka Chemical Co., Ltd.

### <Content>

In the epoxy resin composition, the ratio of the number of active hydrogens in the epoxy resin curing agent (B) to the number of epoxy groups in the epoxy resin (A) (Number of active hydrogens in epoxy resin curing agent (B)/Number of epoxy groups in epoxy resin (A)) is preferably 1/0.5 to 1/2, more preferably 1/0.75 to 1/1.5, and still more preferably 1/0.8 to 1/1.2.

The content of the epoxy resin (A) in the epoxy resin composition is not limited as long as (Number of active hydrogens in epoxy resin curing agent (B)/Number of epoxy groups in epoxy resin (A)) described above is within the preferred range, being preferably 30 to 80 mass%, more preferably 40 to 80 mass%, and still more preferably 50 to 75 mass%.

The content of the epoxy resin curing agent (B) in the epoxy resin composition is not limited as long as (Number of active hydrogens in epoxy resin curing agent (B)/Number of epoxy groups in epoxy resin (A)) described above is within the preferred range, being preferably 5 to 40 mass%, more preferably 10 to 30 mass%, and still more preferably 10 to 20 mass%.

From the viewpoint of obtaining a coating film having high transparency and flame retardancy, the content of the phosphazene-based compound (C) in the epoxy resin composition is, as a content of phosphorus atoms in the composition, preferably 0.1 to 10 mass%, more preferably 0.2 to 8.0 mass%, still more preferably 0.5 to 5.0 mass%, furthermore preferably 0.5 to 2.5 mass%, furthermore preferably 1.0 to 2.4 mass%, and furthermore preferably 1.0 to 2.2 mass%.

The content of the phosphazene-based compound (C) in the epoxy resin composition is preferably 1.0 to 30 mass%, more preferably 2.0 to 30 mass%, still more preferably 4.0 to 20 mass%, and furthermore preferably 5.0 to 20 mass%, from the viewpoint of obtaining a coating film having high transparency and flame retardancy.

The epoxy resin composition may further contain other components depending on the application, such as a curing accelerator, a non-reactive diluent such as benzyl alcohol, a filler, a modifying component such as plasticizer, a flow adjusting component such as thixotropic agent, a pigment, a leveling agent, a tackifier, and elastomer fine particles.

However, from the viewpoint of obtaining a coating film having high transparency and flame retardancy, the total content of components (A) to (C) in the epoxy resin composition is 85 mass% or more, preferably 90 mass% or more, more preferably 95 mass% or more, still more preferably 98 mass% or more, and 100 mass% or less.

From the viewpoint of obtaining a coating film having high transparency, flame retardancy, chemical resistance, etc., it is preferable that the content of water and organic solvent in the epoxy resin composition of the present invention be small.

From the viewpoint of obtaining a coating film having high transparency, flame retardancy, chemical resistance, etc., the content of water and organic solvent in the epoxy resin composition is preferably 10 mass% or less, more preferably 5.0 mass% or less, still more preferably 3.0 mass% or less, furthermore preferably 2.0 mass% or less, and furthermore preferably 1.0 mass% or less.

From the viewpoint of obtaining a coating film having high transparency, flame retardancy, chemical resistance, etc., it is preferable that the content of the thermoplastic resin such as polyphenylene ether in the epoxy resin composition of the present invention be small.

From the viewpoint of obtaining a coating film having high transparency, flame retardancy, chemical resistance, etc., the content of the thermoplastic resin in the epoxy resin composition is preferably 15 mass% or less, more preferably 10 mass% or less, still more preferably 5.0 mass% or less, furthermore preferably 2.0 mass% or less, and furthermore preferably 1.0 mass% or less.

### <Method for preparing epoxy resin composition>

The method for preparing the epoxy resin composition is not particularly limited, and the preparation may be performed by mixing the epoxy resin (A), the epoxy resin curing agent (B), the phosphazene-based compound (C), and other components on an as needed basis using a known method and device. The sequence of mixing the respective components contained in the epoxy resin composition is also not particularly limited. After preparation of the epoxy resin curing agent (B), it may be mixed with the epoxy resin (A) and the phosphazene-based compound (C). Alternatively, the components each constituting the epoxy resin curing agent (B) and other components may be mixed simultaneously with the epoxy resin (A) and the phosphazene-based compound (C) to prepare the composition.

The coating film, which is the cured product of the epoxy resin composition of the present invention, is obtained by curing the epoxy resin composition of the present invention described above by a known method. The curing conditions of the epoxy resin composition are appropriately selected depending on the application and form without particular limitations.

The coating film formed as cured product of the epoxy resin composition of the present invention has excellent transparency and flame retardancy, with rare occurrence of whitening, having a high oxygen index.

### <Flame retardancy>

The epoxy resin composition of the present invention has high flame retardancy. Specifically, the oxygen index of a cured product of the epoxy resin composition having a thickness of 3 mm, measured in accordance with JIS K 7201:1995, is preferably 27 or more, more preferably 28 or more, still more preferably 30 or more, furthermore preferably 32 or more, and furthermore preferably 35 or more.

As one of the indexes of flame retardancy, the oxygen index can be measured to determine the degree of flame retardancy. The oxygen index indicates the oxygen concentration required to continue combustion, and with an oxygen index of more than 21, combustion cannot continue in air under normal conditions. Further, with an oxygen index of 27 or more, it is generally considered that high flame retardancy is exhibited.

Specifically, the oxygen index may be measured by the method described in Examples.

### [Paint]

The present invention provides a paint containing the epoxy resin composition. The paint of the present invention contains the epoxy resin composition, so that the resulting coating film has good transparency and flame retardancy. Examples of the paint include a paint for wood used as interior and exterior materials and structural members of buildings, a paint for ships, a heavy-duty anticorrosive paint, a paint for tanks, a paint for pipe interior, a paint for exterior, and a paint for floors.

From the viewpoint of effectively obtaining the effects of the present invention, the paint according to the present invention is preferably a transparent flame-retardant paint.

From the viewpoint of improving the transparency and flame retardancy, the content of the epoxy resin composition in the paint of the present invention is preferably 50 mass% or more, more preferably 70 mass% or more, still more preferably 80 mass% or more, furthermore preferably 90 mass% or more, furthermore preferably 95 mass% or more, and 100 mass% or less.

### <Application>

The epoxy resin composition is suitably used for the paints and applications such as adhesives, flooring materials, sealants, polymer cement mortar, gas barrier coatings, primers, screeds, top coats, sealing materials, crack repair materials, and concrete materials.

### Examples

The present invention will now be described in detail with reference to Examples and Comparative Examples, though the present invention is not limited to the following Examples. The epoxy resin compositions were evaluated by the following methods.

### <Oxygen index>

The epoxy resin composition of each Example was heated at 80°C for 1 hour for curing, so that a test specimen having dimensions of 70 mm×6.5 mm×3 mm thick was molded.

The oxygen index of the test specimen was measured with a candle combustion tester type D (manufactured by Toyo Seiki Seisaku-sho, Ltd.) by the method in accordance with JIS K 7201: 1995. A higher oxygen index means better flame retardancy.

### <Appearance of cured product (transparency)>

In the same manner as in the method described in the "Oxygen Index", the epoxy resin composition was heated at 80°C for 1 hour for curing to prepare a test specimen. After 1 day, the appearance of the test specimen was visually observed and the transparency was evaluated according to the following criteria. The results are shown in Table 1.

### (Transparency)

A: No turbidity
B: Slightly turbid, with no problem for use
C: Cloudy

### Example 1 (Preparation and evaluation of epoxy resin composition)

As the epoxy resin (A) which is the main agent of the epoxy resin composition, a polyfunctional epoxy resin having a glycidyloxy group derived from bisphenol A ("jER828" manufactured by Mitsubishi Chemical Corporation, epoxy equivalent weight: 186 g/eq) was used. As the epoxy resin curing agent (B), metaxylylenediamine (MXDA, manufactured by Mitsubishi Gas Chemical Company, Inc.), which is component (b1), was used. As the phosphazene-based compound (C), a compound represented by the formula (2-2) (hexaphenoxy cyclotriphosphazene, "FP-100" manufactured by FUSHIMI Pharmaceutical Co., Ltd.) was used.

An epoxy resin composition was prepared by mixing the components (A) to (C) each in amounts of mass% as shown in Table 1. The ratio of the number of active hydrogens in the curing agent (B) to the number of epoxy groups in the epoxy resin (A) (Number of active hydrogens in curing agent (B)/Number of epoxy groups in epoxy resin (A)) is 1/1.

The resulting epoxy resin composition was subjected to various evaluations by the methods described above. The results are shown in Table 1.

### Comparative Examples 1 to 4

Epoxy resin compositions were prepared and various evaluations were performed in the same manner as in Example 1, except that the components and blending amounts used in Example 1 were changed as shown in Table 1. The results are shown in Table 1.

### [Table 1]

**Table 1**

| (mass%) | | | Example 1 | Comparative Example 1 | Comparative Example 2 | Comparative Example 3 | Comparative Example 4 |
|---|---|---|---|---|---|---|---|
| Composition blended | Epoxy resin (A) | jER828 *1 | 71.9 | 84.5 | 73.3 | 76.6 | 56.0 |
| | Epoxy resin curing agent (B) | (b1) MXDA *2 | 13.2 | 15.5 | 13.4 | 0 | 9.7 |
| | | DETA *3 | 0 | 0 | 0 | 8.5 | 0 |
| | Phosphazene-based compound (C) | FP-100 *4 | 14.9 | 0 | 0 | 14.9 | 15.7 |
| | Phosphorus-based flame retardant (C') | FCX-210 *5 | 0 | 0 | 13.3 | 0 | 0 |
| | Polyphenylene ether | IUPIACE PX100L *6 | 0 | 0 | 0 | 0 | 18.6 |
| | Total | | 100 | 100 | 100 | 100 | 100 |
| Number of active hydrogens in curing agent (B)/Number of epoxy groups in epoxy resin (A) | | | 1/1 | 1/1 | 1/1 | 1/1 | 1/1 |
| Total content of components (A) to (C) (mass%) | | | 100 | 100 | 100 | 100 | 81.4 |
| Content of phosphorus atoms in composition (mass%) | | | 2.0 | - | 2.0 | 2.0 | 2.1 |
| Evaluation results | Oxygen index | | 39.5 | 21.5 | - | 23.5 | - |
| | Appearance of cured product (transparency) | | A | A | C | A | C |

The components used in Table 1 are as follows.
*1: polyfunctional epoxy resin having a glycidyloxy group derived from bisphenol A ("jER828" manufactured by Mitsubishi Chemical Corporation, epoxy equivalent weight: 186 g/eq)
*2: metaxylylenediamine (MXDA, manufactured by Mitsubishi Gas Chemical Company, Inc., AHEW: 34)
*3: diethylenetriamine (manufactured by Tokyo Chemical Industry Co., Ltd., AHEW: 20.6)
*4: compound represented by the formula (2-2) (hexaphenoxy cyclotriphosphazene, "FP-100" manufactured by FUSHIMI Pharmaceutical Co., Ltd., phosphorus atom content: 13.4 mass%)
*5: phosphorus-based flame retardant ("Fire Guard FCX-210", manufactured by Teijin Limited, phosphate ester compound, phosphorus atom content: 15 mass%)
*6: polyphenylene ether (PPE, thermoplastic resin, "IUPIACE PX100L" manufactured by Mitsubishi Engineering-Plastics Corporation)

From Table 1, it can be seen that the cured product of the epoxy resin composition of the present invention is good in both transparency and flame retardancy.

### Industrial Applicability

According to the present invention, an epoxy resin composition from which a coating film excellent in transparency and flame retardancy can be formed and a paint containing the composition can be provided.

## Claims

1. An epoxy resin composition comprising an epoxy resin (A), an epoxy resin curing agent (B) containing a diamine represented by the following general formula (1) or a modified product thereof (b 1), and a phosphazene-based compound (C), wherein a total content of the components (A) to (C) in the epoxy resin composition is 85 mass% or more:
NH₂-CH₂-X-CH₂-NH₂ (1)
wherein X is a phenylene group or a cyclohexylene group.

2. The epoxy resin composition according to claim 1, wherein the component (b1) comprises a diamine represented by the general formula (1) or a styrene-modified product thereof.

3. The epoxy resin composition according to claim 1 or 2, wherein X in the general formula (1) is a phenylene group.

4. The epoxy resin composition according to any one of claims 1 to 3, wherein the component (C) comprises a cyclic phosphazene compound.

5. The epoxy resin composition according to claim 4, wherein the cyclic phosphazene compound is a compound represented by the following general formula (2-1): 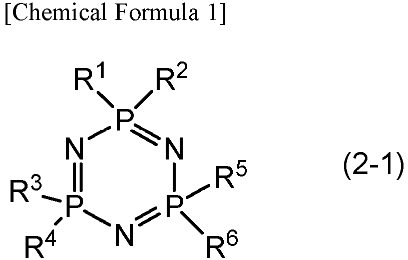 wherein R¹ to R⁶ each independently represent a fluorine atom, an alkoxy group having 1 to 12 carbon atoms, or an aryloxy group having 6 to 12 carbon atoms optionally having a substituent.

6. The epoxy resin composition according to any one of claims 1 to 5, wherein the content of the component (C) in the epoxy resin composition is 0.1 to 10 mass% as a content of phosphorus atoms in the composition.

7. A paint comprising the epoxy resin composition according to any one of claims 1 to 6.
